# EUROPEAN PATENT APPLICATION

(11) **EP 4 030 282 A1**
(43) Date of publication of application: **20.07.2022**
(21) Application number: 21151254.6
(22) Date of filing: 13.01.2021
(51) Int. Cl.: G06F 8/75, G06F 3/0481, G06F 3/01

(54) **COMPUTING SYSTEM AND METHOD FOR SOFTWARE ARCHITECTURE PLANNING**

(71) Applicant: Siemens Aktiengesellschaft, 80333 München (DE)
(72) Inventor: Latharani Nataraja, Gowri, 81737 München (DE); Sudharsan, Nischita, 82031 Grünwald (DE)

(57) **Abstract**

The invention relates to a computing system and method for software architecture planning. Therefore the computing system comprises a 3D-visualization computational device providing a user interface, a processing unit, a computer readable media, and a 3D-visualization software component providing a 3D-modelling framework including graphical 3D-model templates for defined software components and connectors. The method comprises the steps applying a 3D-visualization software, providing graphical 3D-model templates for defined software components and connectors, providing 3D-modelling framework for defined architecture requirements, within which 3D-modelling framework a user is provided with instructions for building a 3D-visualization of a software architecture using the graphical model templates.

## Description

The invention relates to a computing system and method for software architecture planning.

Most of the software now a days is no longer a monolithic piece of source code that runs on a single machine. Instead, it is distributed with multiple software components and software services working together and interacting with each other. Typically, these software components are developed from geographically distributed development teams. This results in a scenario, where each team develops and understands a part of a software but faces challenges in understanding other parts of the software, understanding the big picture or a high-level view of a complete software system with all interactions between its components.

There are tools which help in visualization of single specific aspects of software systems, which provide for example visualization of software systems as interactive, navigable 3D-cities. The classes in source code are represented as buildings, districts and so on. However, these tools refer to source code visualization only and are not depicting the entire software architecture.

There are variety of 2D static code analysis tools, which support visualization of dependencies with code metrics for .net-based source code. (.NET is a free, cross-platform, open source developer platform for building different types of applications. One can write .Net software applications in programming languages like c#, Visual Basic, etc..).

For entire software architecture representation, different commercially available 2D drawing tools are used to depict the software architecture. Software projects can use these tools along with monitoring tools, bug repositories etc. to visualize aspects of software system.

Up to now, any architectural information of a software product, an extensive software project or a selected software component, is limited to 2D-representation. This limits readability and consumption of the architectural information. A stakeholder has to understand the different software components and its interdependencies within a software by viewing complex diagrams. This kind of representation is inflexible, a user can be lost and get confused and it is not fully understandable which modules affect the user's relevant components.

Accordingly, it is an object to further improve and simplify the representation of software, in particular of extensive multi-modular software systems, for the purpose of software development, software testing and software securing concerning errors or faults.

This object is achieved by the features of the independent claims. Advantageous embodiments emerge from the dependent claims.

According to a first aspect of the invention, a computing system for 3D-visualization of software architecture is provided, that comprises a 3D-visualization computational device providing a user interface, a processing unit, a computer readable media, and a 3D-visualization software component providing a 3D-modelling framework including graphical 3D-model templates for defined software components and connectors.

Via the 3D-representation of architectural plans of software development projects, efficiency is increasing in overall the project development and testing phase. The 3D-representation also eliminates multiple calls or meetings required for everyone involved in the project to understand the whole concept, thereby saving time and money.

The proposed computing system provides an advantageous tool for making visible even complex dependencies of software components in software systems, e.g. concerning their inputs and outputs. The computer system responds to the challenge of continuing system growth. It becomes difficult to understand the interdependency of components.

If, for example, a software system contains software components A, B, C and D, component A might depend on components B and C. In order for component A to work well, it is important to not only monitor component B and C but to have even additional information about these components B and C, that could be, whether there is a new version of component B or C deployed, what is the current state of component C or whether it has crashed etc. There might be other components which are dependent on component A in which case component A has to ensure that it does not break any dependent components. This kind of software monitoring can be perfectly challenged with the proposed computing system, even when number of metrics to monitor increase.

The 3D-visualization computational device can be a headset or see-through-display, providing the user interface.

As used herein, the term "user" refers, for example, to a person, who is creating a 3D-architecture plan as well as users can be learning from the 3D-Architecture plan. The same or another user can be a person, who is developing the software by use of the 3D-architecture plan.

The 3D-architecture reveals interdependencies, that would be hidden in any former, other, 2D representation and thus provides a more effective and more secure development tool, secure concerning errors or faults.

The processing unit is at least comprising one processor. The processing unit can comprise several processors.

The computer readable media especially is a computer readable storage media.

The 3D-visualization software component providing a 3D-modelling framework including graphical 3D-model templates for defined software components and connectors is in particular provided as application or any other computer program product.

According to a further aspect of the invention, an embodiment of the computing system comprises an input unit for input of software architecture data, wherein the software architecture data comprises software components and connectors.

This approach enables making pseudo-real-world models representing the architecture of large projects to solve the problem of understandability. The 3D application helps create pseudo-real-world objects in 3D fast and efficiently.

According to a further aspect of the invention, an embodiment of the computing system comprises a 3D-visualized software creation component.

As used herein, the term "creation", for example, means modification of an existing software, a software project or software component, of an existing base model template or creating an architecture model using the visualization framework as reference.

As used herein, the term "creation", for example, could also refer to going from 3D-software developing to code, comparable to object-oriented programming (OOP) like Visual Basic. Once the visualization is created using our framework in Unity, the application needs to be deployed onto a device supporting 3D interactions, for example HoloLens. Additional connections to the existing architectural components such as code base repositories, artifacts, databases etc. can be integrated via programming, for example for HoloLens, it's C#, for iOS devices it is C++ and so on.

According to a further aspect of the invention, an embodiment of the computing system, in particular the 3D-visualization computational device, further comprises at least one sensing unit for voice control. In an alternative embodiment, the 3D-visualization computational device comprises at least one sensing unit for gesture control or for gaze control. In a preferred embodiment a combination of two or three or more sensing units is provided, enabling voice and gesture control, voice and gaze control, gesture and gaze control or voice, gesture and gaze control in combination or as choice for the user.

As used herein, the term "gaze" refers, for example, to eye-view-based interaction, meaning i.e. to track where the user is currently looking, as defined in the mixed reality world.

According to a further aspect of the invention, an embodiment of the computing system comprises a 3D-visualization software component, that provides contextual differentiated 3D-modelling framework including graphical 3D-model templates for defined software components and connectors according to a role of a user.

In a further aspect of the invention, the 3D-visualization software component of the computing system, according to beforementioned embodiments, provides contextual differentiated 3D-modelling framework including graphical 3D-model templates for additional data related to software architecture that can be part of the same visualization model. For example, software components, related code repository data like code size, bugs, dependency between components etc. and additional data, e.g. external data base interactions, related to components, are also visualized.

As used herein, the term "Contextual Differentiation" refers, for example, to differentiation according to login data, according to fix categories, according to any criteria like role, pre-defined categories, user selection, types of artifacts shown etc. Customization is available.

According to a further aspect of the invention, an embodiment of the computing system comprises a 3D-visualization software component, that provides a failure prediction function concerning missing components or interrupted connectors.

The computing system according to beforementioned embodiments, wherein the 3D-visualization software component provides a unified view of multiple aspects of software architecture, helps in software-walk-throughs.

The advantageous computing system according to beforementioned embodiments, meets the challenge to make visible and thereby help understanding how a software (component) behaves in new deployment environments like cloud computing infrastructures, e.g. AWS, Heroku, etc. The system or method respectively includes a huge variety of software monitoring and software management tools of its own. That helps in managing parts of large distributed software systems or projects.

This further provides a considerable benefit for development teams, who monitor these separate tools, for example issues in software development lifecycle tools or bug repositories, network through put monitoring etc., in order to get complete information about a software.

The computing system according to beforementioned embodiments, further advantageously provides various granularity levels of visualization, which is required for deployment teams to understand the system easily at one place. For these development teams, information on code level metrics, current deployment metrics, bug reports, code sizes in particular before refactoring, etc. is provided. Further, the development teams are enabled to check high level architecture, understand overall dependency in system or provide a software architecture walkthrough for a new onboarded developer.

According to another aspect of the invention, a method for a computing system according to one of the beforementioned embodiments is provided, the method comprising the following steps:
- Applying a 3D-visualization software,
- Providing graphical 3D-model templates for defined software components and connectors,
- providing 3D-modelling framework for defined architecture requirements,
- within which 3D-modelling framework a user is provided with instructions for
- Building a 3D-visualization of a software architecture using the graphical model templates.

As used herein, the terms "software component" and "software connector" refer, for example, to an abstract description of a software system, the connectors describing the interaction between the components.

According to a further aspect of the invention, a method is provided, wherein building the 3D-visualization of a software architecture is performed by plug and play of the graphical model templates.

The term "plug and play" referring to an approach, where a new user would re-use existing templates from the framework we provide, to build their own version of the architecture model. This reduces the overhead of creating new templates as most would already be present in our framework.

According to a further aspect of the invention, a method is provided, which provides at least one template, in particular a selection of templates, of 3D-model templates for defined software components.

According to a further aspect of the invention, a method is provided, which comprises a semi-automated step of software component and connector recognition within a software architecture data input and drafting 3D-model templates of recognized software components and connectors.

This aspect of the invention is of special benefit for different user groups, like product management teams. Their point of interest in software is different from developers. For them to understand the current state of a software quickly, the provided method offers variants to achieve the required architectural plan.

A product management team might not want to understand about bug reports in detail. However, they might be interested in understanding which software components have more bugs. Thus, the system and method enable multiple visualization of software in varied granularity. Based on a user who wants to understand a software, the visualization must be tailored to required granular level.

According to a further aspect of the invention, a method is provided, which comprises an automated step of software component and connector recognition within a software architecture data input and drafting a 3D-model template of the input software architecture.

According to a further aspect of the invention, a method is provided, which comprises the insertion of programming modules to the framework.

According to a further aspect, a computer program product is provided, comprising instructions which, when the program is executed by a computer, cause the computer to carry out the steps of the beforementioned computer-implemented method for 3D-visualization of software architecture. According to a further aspect, a provision apparatus for the beforementioned computer program product is provided, wherein the provision apparatus stores and/or provides the computer program product.

The provision apparatus can be a data storage saving and/or providing the computer program product. Alternatively, the providing apparatus can be a computer system and/or a server system and/or a network and/or a cloud-based computer system and/or virtual computer system. The providing apparatus saves and/or provides the computer program product. Preferably, the complete computer program product is provided by said providing apparatus in the form of a download, for example, as a file or a data stream. Alternatively, the computer program product is provided by at least two partial downloads, for example, provided by a peer to peer network, each containing a piece of said computer program product. For example, such a computer program product can be provided by a data storage, which is read and executed by a computer system. As a consequence, the computer system is able to execute the disclosed method. Alternatively, and/or additionally, the computer program configures a manufacturing device as above mentioned.

A data storage or computer-readable medium can be electronic, magnetic, optical, or a semiconductor system (or apparatus or device). Examples of a computer-readable medium include, but are not limited to, a semiconductor or solid state memory, magnetic tape, a removable computer diskette, a random access memory (RAM), a read-only memory (ROM), a rigid magnetic disk, an optical disk, etc. Current examples of optical disks include compact disk-read only memory (CD-ROM), compact disk-read/write (CD-R/W) and digital versatile disk (DVD).

Alternatively and/or additionally, the provision apparatus is a network service, a computer system, a server system, particularly a distributed computer system, a cloud-based computer system and/or a virtual computer system that stores and/or provides the computer program product preferably in the form of a data stream, for example. This provision is effected as a download in the form of a program data block and/or instruction data block, preferably as a file, particularly as a download file, or a data stream, particularly as a download data stream, of the complete computer program product, for example. This provision can alternatively be effected as a partial download that consists of multiple parts and is downloaded particularly via a peer-to-peer network or provided as a data stream, for example. Such a computer program product is read in, for example using the provision apparatus in the form of the data storage medium, in a system and executes the program instructions, so that the method according to the invention is executed on a computer, or configures the creation device such that it creates cited system and/or execution unit according to the invention.

Preferably, the presented embodiments are implemented by a processor and/or a memory device unless otherwise noted.

In detail, to implement and/or execute the invention, the inventive method, components, devices etc. comprise at least one processor and/or at least one memory device unless otherwise noted. Additionally, the inventive method, components, devices etc. comprise, for example, other features known by a skilled person. For example, these features can be further input units, like a microphone, an accelerometer or a camera.

In another preferred variant of the invention, a processor is specifically configured to execute the computer readable instructions such that said processor is preferably configured to perform functions which implement a step/all steps of the inventive method.

Further definitions:
Unless specifically stated otherwise, as apparent from the following discussions, it is appreciated that throughout the specification discussions utilizing terms such as "processing", "computing", "computer-based", "calculating", "determining", "generating", "configuring" or the like, refer to the action and/or processes of a computational device that manipulates and/or transforms data into other data, said data represented as physical, e.g. such as electronic, quantities.

The term "computational device" should be expansively construed to cover any kind of electronic device with data processing capabilities, including, by way of non-limiting example, personal computers, servers, handheld computer systems, Pocket PC devices, Cellular communication device and other communication devices with computing capabilities, processors and other electronic computing devices.

As used herein, the term "processor" refers, for example, to controllers, microcontrollers (e.g. digital signal processor (DSP) possibly in combination with memory and storage units memory unit storing computer-readable instructions, application specific integrated circuit "ASIC", etc.), processor cores, central processing units, integrated circuits/processing circuitry (e.g. application specific integrated circuit "ASIC", field programmable gate arrays "FPGA" etc.) or digital signal processors. Furthermore, the term "processor" can, for example, refer to virtual processors, virtual CPUs, soft processors or soft CPUs. Moreover, said processor can, for example, be configured to execute computer readable instructions such that said processor is preferably configured to perform functions which implement the invention.

As used herein, the term "component" refers, for example, to a processor and/or a memory unit storing computer-readable instructions. For example, the processor is specifically configured to execute the computer readable instructions such that said processor is preferably configured to perform functions which implement the invention, such as a step of the inventive method. Furthermore, the term "component" can, for example, refer to means (e.g., a processor) which are configured to implement/execute functions/steps of the invention.

In the following, possible embodiments of the different aspects of the present disclosure are described in more detail with reference to the enclosed figures.

The accompanying drawings are intended to provide a better understanding of the embodiments. They show embodiments and serve in conjunction with the description to explain principles and concepts of the disclosed subject matter. Other embodiments and many of the cited advantages will emerge in respect of the drawings. The elements of the drawings are not necessarily shown in scale with one another. Identical reference characters here designate identical components or components of comparable effect.

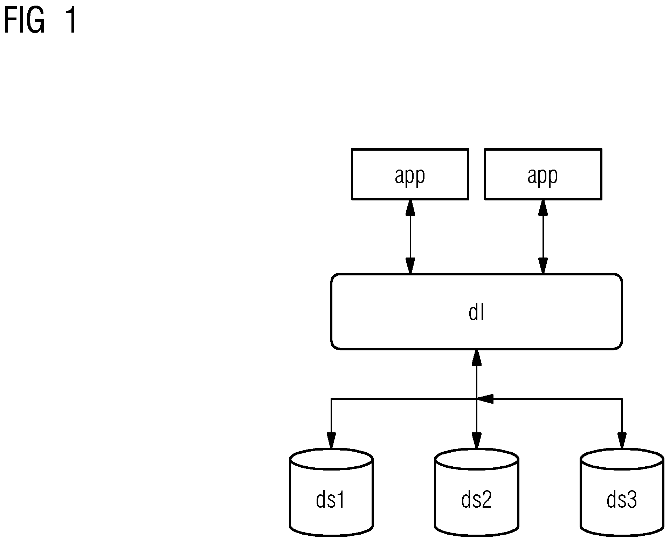

The properties, features and advantages of this invention that are described above and the manner in which they are achieved will become clearer and more distinctly comprehensible in conjunction with the description of the exemplary embodiments that follows, these being explained in more detail in conjunction with the figures 1 to 6, in a schematic depiction:
- Figure 1: shows a diagram of an exemplary software project,
- Figure 2: shows a diagram of the core components of that exemplary software project,
- Figure 3: shows another 2D-representation of the exemplary software architecture, and
- Figure 4: shows the corresponding 3D-representation of the exemplary software architecture.

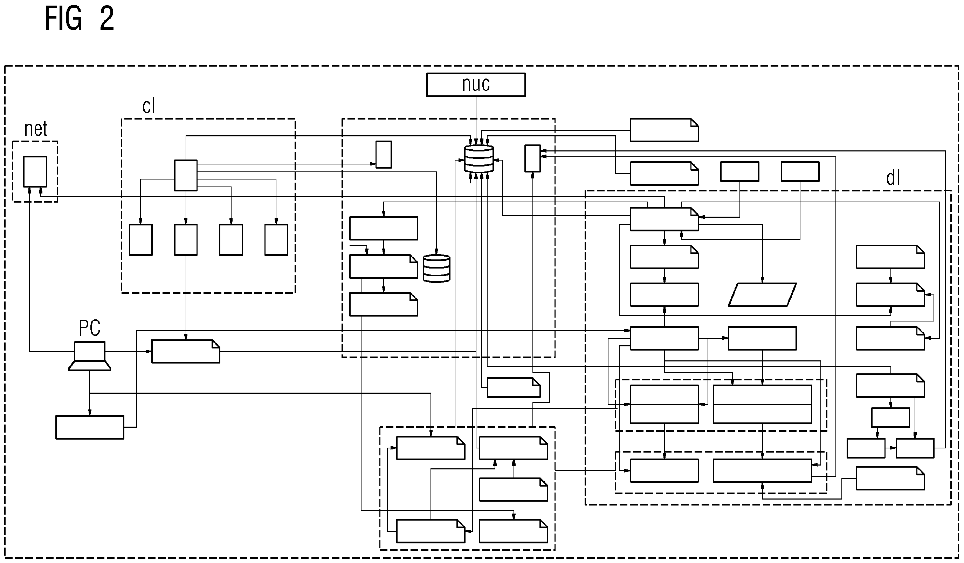

Figure 1 shows an up to date 2D-representation of a first exemplary software project that aims to be a semantic integration framework that allows data from multiple sources queried together in a so called data layer dl. It allows for example applications app to leverage data from disconnected sources ds1-3. An exemplary use case of this software project could be diesel motor data: The engineering data related to a diesel motor might be in a first data source ds1, the corresponding sensor data of diesel motor might be in a second data source ds2, and current operation data of motor might be in a third data source ds3. An application app which wants to predict lifetime of diesel motor might be interested in data from all three data sources ds1-3. In such scenario, the software project allows north bound applications app to query effectively integrated data, meaning only required data, across several data sources ds1-3. The data sources ds1-3 can be any data sources like Teamcenter, Mindsphere etc. Such a data layer dl might have high level architecture as described in figure 2.

Figure 2 shows an abstract diagram of the component level architecture of the core of the data layer dl. This demonstrates, that even a software with a smaller number of components, presented as boxes and folder icons, can quickly become difficult to visualize and understand component-to-component interaction, presented as arrows, in an up to date 2D-representation.

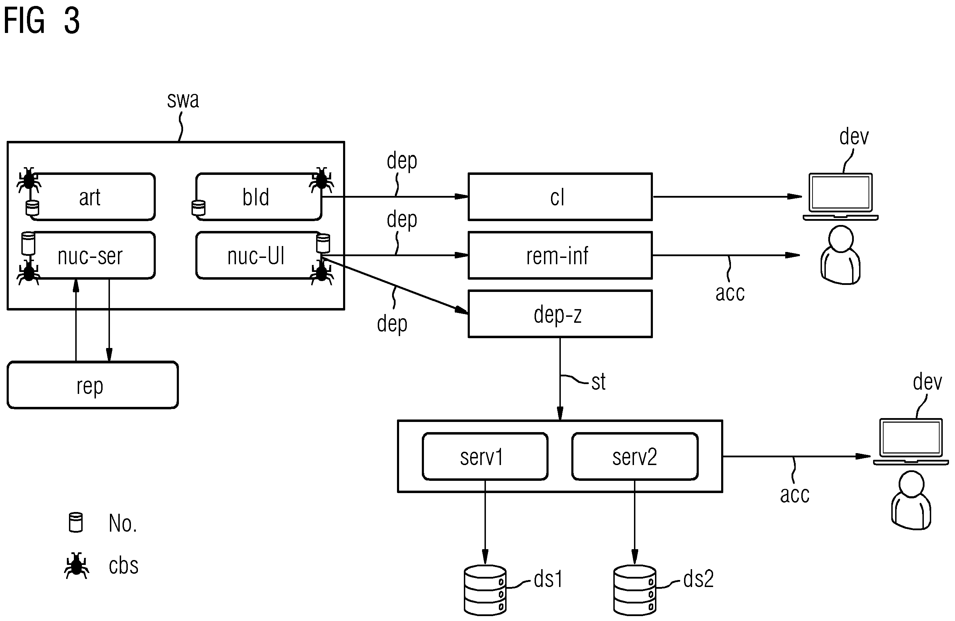

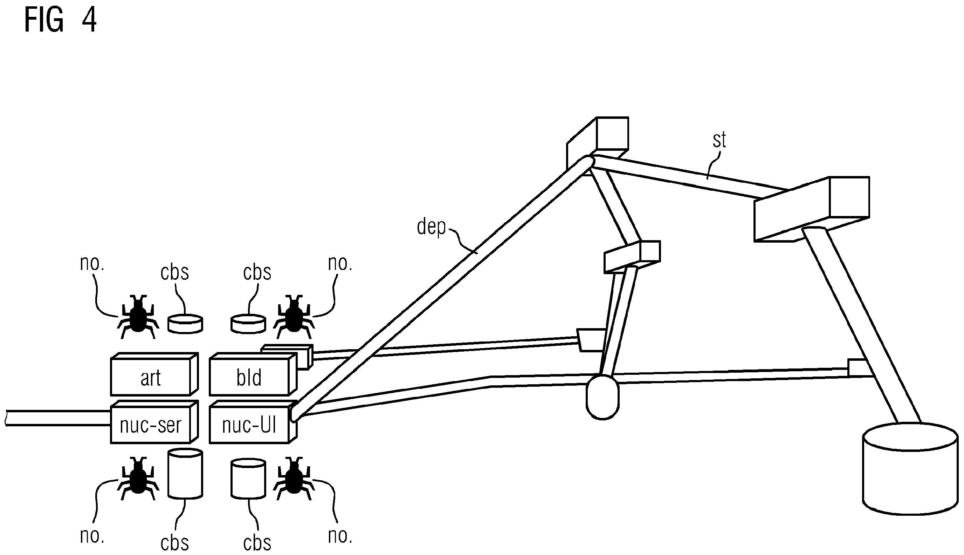

Figures 3 and 4 provide an exemplary demonstration of transforming a 2D- to a 3D-representation of a software project. The system and method according to the application meet the challenge to visualize a complete software architecture swa as well as dive into architecture components to understand component level view. Components in this example comprise servers serv1-2, a deployment zip, dep-z, a remote infrastructure, rem-inf, a cluster cl. Diving into the data layer software swa, there are further components like artifacts, art, build, bld, nucleus service, nuc-ser, or nucleus UI, nuc-UI.

The proposed idea provides a 3D-Augmented reality (AR) and/or Virtual Reality (VR) based interactive software visualization system that comprises a visual representation of multiple software aspects, like architecture, code metric etc., at multiple levels, meaning from high level overview to granular, inside-a-component view, thus helping software developers, product managers, testers to understand the software better and have a consolidated view of the developed software with ability to plugin data from multiple sources.

The representation of intricate and multifaceted architectural diagrams in a way that the stakeholder is able to consume and interpret information at ease, is shown in more detailed representations of the exemplary software project. The provided computing system and method for software architecture planning comprises a 3D-visualization computational device providing a user interface. This can be done using any 3D app development software. The idea is to visualize the complex architectural concept in the 3D application made with the help of the 3D app development software, in order to understand the architecture better. The 3D-visualization computational device for example can be a head mounted device (HMD).

One benefit is that the stakeholder, who can be anyone involved in the project who needs to understand the architecture, wears for example a HMD, and views the 3D architectural representation rendered in the HMD. The 3D visualization can be both seen and interacted with. And a user is able to physically "walk into" parts of the visualization, in order to understand that component and its dependencies better. Such dependencies for example comprise different interaction types between the components like accessing acc a computational device dev, that could comprise a user interface, deploying dep a certain software component to another or starting st for example a service serv1-2 application. There can be one way dependencies or bilateral interaction, e.g. between a GitLab repository, rep, and the nucleus service component nuc-se.

Additionally, the representation comprises information like the number of bugs, no., or the code base size cbs concerning a specific software component.

Depending on whether an AR device or a VR device is being used, the participation of the stakeholder in the viewing, understanding and interacting with the 3D-model is either fully immersive (VR) or partially immersive (AR). What this means is that with a VR device, the user only is able to see the 3D visualization and nothing else as the headset renders a completely virtual world for the user's eyes. In AR, the user will be able to see both the real world and the 3D visualization blending with each other and therefore, the user can interact with it along with seeing real world objects. Depending on the use case and preference, AR or VR could be chosen which makes the idea of this system even more versatile.

Figure 4 shows an exemplary cutout of how the 2D-representation of the architecture slide, see figure 3, of the data layer dl architecture is transformed into a 3D-visualization using the provided method and software. This same concept can be extended to multidimensional and compound software architectures. With the help of the 3D-visualization software component a 3D-modelling framework including graphical 3D-model templates for defined software components and connectors is provided.

The method comprises the steps applying a 3D-visualization software, providing graphical 3D-model templates for defined software components and connectors, providing 3D-modelling framework for defined architecture requirements, within which 3D-modelling framework a user is provided with instructions for building a 3D-visualization of a software architecture using the graphical model templates.

The creation, replication and modification of the 3D-visualization using 3D software is easy and intuitively applicable. Preferably, there is no coding involved. The creator has to interact simply with the GUI components and at the most, drag and drop existing artifacts into the application, as for example in the following tabular:
T □ Collection
T ■ Artifacts
   □ Text
   □ Text (1)
      ► ■ Build
      ► ■ NucleusService
      ► ■ NucleusUI
      ► ■ NucleusService
      ► ■ Remote Infrastructure
      ► ■ Deployment Zip
      ► ■ Server 1
      ► ■ Server 2
      ► □ DataSource 1
      ► □ DataSource 1
         ■ Laptop_black
      ► □ User

A simple example of this advantage is shown in figure 4, which shows components which are derived from basic shapes such as cubes, rectangles, cylinders etc. As an example, the four main components artifacts, art, build, bld, nucleus service, nuc-ser, and nucleus UI, nuc-UI of the data layer dl nucleus are depicted as four rectangles.

The connectors are depicted as large pipe like objects and code bases are depicted as cylinders. These can also be color coded for better readability. Preferably, the 3D-visualization software component allows to import user's own assets, which can be an image, video, graph etc., to help represent the software modules clearly. In the shown example, a bug asset is being used to depict the number of bugs no. which were encountered by developers. "Touching" or "Tapping" the bug could allow the user to see more about the bugs in that part of the project, for instance. This offers a lot of benefit to the user who is trying to get a contextual view of the architectural components relevant to the user. Any new creator trying to replicate this view for their own architecture, has the benefit of duplicating these prefabs from one project and using it in another. Thereby eliminating the need for a lot of rework.

Further, system and method according to the invention provide the ability to plug-in various sources as data to serve as input for the architectural 3D-representation. The input to the 3D-software can comprise various sources which contribute input data to the components. These can be for example, graphs or metrics, and so on. The 3D-app can be programmed to include add-ins from multiple, existing systems to feed in data.

For focusing on contextual information according to the role of the stakeholder viewing the 3D-visualized software project, the user can strip away elements which are not relevant to the user's role. These kind of interactions and functions are in particular programmed into the 3D-visualization software component. The user can also learn about predicted failures in case a component is missing or not delivering the right data to another component. Also causal events can be integrated into the 3D-visualization software application via programming and can support the stakeholder to better understand the architecture. The stakeholder who is interested only in the Deployment zip component dep-z, can "walk into it" or "touch" it in the 3D-application to reveal what this component dep-z holds in terms of its dependencies, inputs, sources, outputs etc. This way, the stakeholder immediately understands what that component dep-z is doing in context of the data layer dl architecture. The interaction can be also used to "switch off" other components which are not needed for that stakeholder. Thereby allowing for customization and contextual information according to the role.

The solution described offers a lot of advantages. It offers a unique way to visualize and understand intricate architectures, especially of large multi-dimensional projects. It saves time for the stakeholders in complex architectures to grapple with the vast amount of information better. It allows for better understanding of the architectural plan via the 3D-representation, thereby increasing in overall the project efficiency, especially in software development. The 3D-representation also eliminates multiple calls or meetings required for everyone involved in the project to understand the whole concept, thereby saving time and money.

The main benefit still is the representation of complex and large-scale architectures which are not easy to understand in 2D. Due to this inflexibility of the 2D representation, the user is lost and confused and doesn't fully understand which modules affect the relevant components. The 3D-representation allows the user to physically render these large visualizations in the 3D-world and can view this contextually by selecting a part of it, and by physically walking into the component itself.

Immersive learning and intuitive interactions of complex architectures - by "stepping into it" or "walking into it physically" with the help of 3D-visualization, especially in combination with AR- or VR-HMDs, the user has the ability to physically interact with the software components and walk around the architectural plan and look at connections with other modules. This enables easy and immediate understanding and consumption of complex interdependencies. The versatility of the deployed AR- or VR-technology allows complete immersive or augmented participation, depending on which technology the 3D-application uses, the participation can be fully immersive or partially immersive. Easier architecture and code walk through for newly onboarded developers who join a team helps them face the challenge in understanding complicated software systems. The walkthrough capability of AR/VR helps in understanding interaction of software components. An alternative exemplary software could be a cloud based IoT open operating system, which connects products, plants, systems, and machines, enables harnessing the wealth of data with advanced analytics and, in addition, gives you access to a growing number of apps and a dynamic development ecosystem. Such a system can consist of umpteen sub projects in a project which has team members working on from across the globe. It is almost impossible to get an understanding of such number of components at high level as well as understand the component level interaction s in each of subprojects. For such a big software, there could be multiple monitoring tools for each section of software - condition monitoring for deployed components, software metrics from code base, bug data base etc.

### References:

- app: application(s)
- dl: data layer
- ds 1, ...3: data source (s) 1 to 3
- nuc: dl nucleus
- PC: user PC
- net: Internet
- acc: access, e.g. multiple data sources through one interface
- dev: computational device
- dep: deploy
- swa: software architecture, e.g. data layer architecture
- no.: number of bugs
- cbs: code base size
- serv1, 2: server 1, 2
- st: start
- dep-z: Deployment Zip
- rem-inf: Remote Infrastructure
- cl: cluster, e.g. K8 cluster in amazon
- art: artifacts
- bld: Build
- nuc-ser: nucleus Service,
- nuc-UI: nucleus UI
- rep: GitLab repo

## Claims

1. Computing system for 3D-visualization of software architecture comprising
- 3D-visualization computational device providing a user interface,
- Processing unit,
- Computer readable media, and a
- 3D-visualization software component providing a 3D-modelling framework including graphical 3D-model templates for defined software components and connectors.

2. Computing system according to claim 1, further comprising an input unit for input of software architecture data, wherein the software architecture data comprises software components and connectors.

3. Computing system according to claim 1 or 2, further comprising 3D-visualized Software creation component.

4. Computing system according to one of claims 1 to 3, the device further comprising at least one sensing unit for voice and/or gesture and/or gaze control.

5. Computing system according to one of claims 1 to 4, wherein the 3D-visualization software component provides contextual differentiated 3D-modelling framework including graphical 3D-model templates for defined software components and connectors according to a role of a user.

6. Computing system according to one of claims 1 to 5, wherein the 3D-visualization software component provides a failure prediction function concerning missing components or interrupted connectors.

7. Method for a computing system according to one of the claims 1 to 6 comprising the steps:
- Applying a 3D-visualization software,
- Providing graphical 3D-model templates for defined software components and connectors,
- providing 3D-modelling framework for defined architecture requirements,
- within which 3D-modelling framework a user is provided with instructions for
- Building a 3D-visualization of a software architecture using the graphical model templates.

8. Method according to claim 7 wherein building the 3D-visualization of a software architecture is performed by plug and play of the graphical model templates.

9. Method according to one of claims 7 to 8 providing at least one template of 3D-model templates for defined software components.

10. Method according to one of claims 7 to 9 comprising a semi-automated step of software component and connector recognition within a software architecture data input and drafting 3D-model templates of recognized software components and connectors.

11. Method according to one of claims 7 to 10 comprising an automated step of software component and connector recognition within a software architecture data input and drafting a 3D-model template of the input software architecture.

12. Method according to one of claims 7 to 11 comprising the insertion of programming modules to the framework.

13. A computer program product comprising instructions which, when the program is executed by a computer, cause the computer to carry out the steps of the method according to one of claims 7 to 12.

14. Provision apparatus for the computer program product according to Claim 14, wherein the provision apparatus stores and/or provides the computer program product.
